# EUROPEAN PATENT APPLICATION

(11) **EP 4 814 454 A1**
(43) Date of publication of application: **30.09.2026**
(21) Application number: 25166238.3
(22) Date of filing: 26.03.2025
(51) Int. Cl.: G01K 1/024, A47J 37/12, G01K 7/42

(54) **FOOD THERMOMETER**

(71) Applicant: ELECTROLUX APPLIANCES AKTIEBOLAG, 105 45 Stockholm (SE)
(72) Inventor: HOFFMANN, Harald, 91541 Rothenburg ob der Tauber (DE); SCHEIDERER, Rebecca, 91541 Rothenburg ob der Tauber (DE); ZAPALSKA, Emilia, 91541 Rothenburg ob der Tauber (DE)
(74) Representative: Electrolux Group Patents

(57) **Abstract**

The invention provides a food thermometer arrangement comprising a temperature probe (P) having a temperature sensor (T) adapted to provide a temperature signal (Temp) and adapted to be positioned in thermal contact with a food (F), and a transmission element (T) configured to transmit a temperature signal and/or control signals to a food preparation apparatus (H). The food thermometer arrangement further comprises a trigger element (B) adapted to generate a trigger signal (b) and a control module (C) configured to receive the temperature signal (Temp) from the temperature sensor (T) and the trigger signal from the trigger element (B), wherein the control module (C) is configured to generate a temperature control signal (Temp/Sig) in dependency of the temperature signal (Temp) and the trigger signal (b).

## Description

### FIELD OF THE INVENTION

The present invention relates to a food thermometer arrangement, a food preparation arrangement, a food preparation control arrangement and a method of operating a food thermometer arrangement.

### BACKGROUND

Cooking is a process that involves the application of heat to food. The main goal of this process is to transform the food into a form that is more palatable, safe, and digestible. The temperature at which food is cooked plays a critical role in determining the cooking time and the quality of the final product. Many appliances used for cooking food use the heating of the food by a surrounding fluid, such as air, water, or oil, that then transfers heat to the food. In these systems, the temperature of the fluid is often controlled to achieve a desired final core temperature for the food. These cooking techniques include methods such as baking, boiling, frying, sous vide cooking, smoking, or the like. Furthermore, the temperature that the food "feels" during cooking is essentially the surface temperature, rather than the temperature of the surrounding fluid, and the food temperature also varies from the food surface to the food core. Therefore, it would be beneficial to measure and control the surface and/or the internal temperature of the food directly during the cooking process to improve efficiency and speed. A food thermometer, also known as a cooking thermometer or meat thermometer, is a thermometer used to measure the internal temperature of food, such as roasts, steaks, fillets, cutlets, or other cooked foods. The degree of "doneness" of food correlates closely with the internal temperature, so that a thermometer reading indicates when the food is cooked as desired.

### SUMMARY OF THE INVENTION

It is an object of the invention to provide a food thermometer arrangement, a food preparation arrangement and a food preparation control arrangement improving the reliability of food preparation, as well as a method increasing the reliability of food preparation.

The invention is defined in the independent claims and preferred embodiments are set out in the dependent claims.

According to the invention a food thermometer arrangement is provided. The food thermometer arrangement comprises a temperature probe having a temperature sensor adapted to provide a temperature signal and adapted to be positioned in thermal contact with a food, and a transmission element configured to transmit a temperature signal and/or control signals to a food preparation apparatus. The food thermometer arrangement further comprises a trigger element adapted to generate a trigger signal and a control module configured to receive the temperature signal from the temperature sensor and the trigger signal from the trigger element, wherein the control module is configured to generate a temperature control signal in dependency of the temperature signal and the trigger signal.

By providing a temperature probe that comprises a temperature sensor that is adapted to be positioned in thermal contact with food, the temperature of the food may be measured directly.

By generating a temperature control signal in dependency of the temperature signal and the trigger signal an accurate temperature regulation may be obtained. This may ensure that the food is cooked at a precise temperature by compensating thermal inertia of the temperature probe, specifically its temperature sensor. The temperature control signal that is generated based on the detected temperature signal and the trigger signal represents a compensated temperature signal which more reliably reflects the actual temperature of the food as compared to the initial temperature sensed by the temperature sensor, which in the time after the thermal contact may be compromised by thermal inertia. Using such compensated temperature control signal as starting temperature for the following food preparation process may prevent undercooking or overcooking of the food and may consequently lead to a higher reliability of food preparation in terms of better food quality and safety. The food may be for example a piece of meat in a roasting tray or a casserole or a soup or a sauce or goulash or water in which the food is boiled.

Furthermore, it may be ensured that once a temperature control signal is set, it may remain stable throughout the cooking process of the food. This may be particularly beneficial for delicate foods like sauces or meats, where careful temperature control may be crucial. In addition, the food thermometer arrangement may be adaptable to various cooking scenarios, including baking and preparation of complex recipes, which may enhance efficiency and reliability across different uses. In general, the food thermometer arrangement may enhance the cooking experience by providing an accurate, easy-to-use temperature control, which may reduce waste from undercooked or overcooked dishes and may ensure consistent outcomes across various culinary applications.

The temperature probe may also be denoted as e.g. food probe or cooking thermometer. The food thermometer arrangement may be a stand-alone product in which the temperature sensor, the control module and the trigger element are arranged, preferably integrated, for example in a common case from which the temperature sensor protrudes.

The temperature signal may be indicative of a temperature of the surface of the food. Preferably, the temperature signal may be indicative of a temperature of an inner or core temperature of the food, for example if the temperature sensor is inserted into the food.

Preferably, the temperature probe comprises a body housing the transmission element. Preferably, the temperature sensor extends from the body. Preferably, the temperature sensor comprises an elongate element and/or a tapering or acute distal end. Preferably the temperature sensitive element of the temperature sensor may be arranged in the distal end.

The control module may be implemented in hardware and/or in software in a controller. For example, the control module may be a function of an application running in a mobile device and/or in a heater control unit.

The transmission element may be an element that is transmitting the temperature and/or control signal by wire to a receiving module or wireless to a receiving module. In case of a wired transmission preferably the transmission element and the receiving module may be connected by a wire, which preferably may be releasably connected to the receiving module e.g. at the side of the device providing the receiving module and may be fixedly connected e.g. at the side of the temperature probe (preferably mechanically coupled to a housing of the temperature probe). The wireless connection may be implemented by a Bluetooth^{®} or Radio Frequency (RF) connection or by an optical connection.

Preferably, the temperature control signal may be transmitted or may be configured to be transmitted to a food preparation apparatus.

Preferably, the temperature control signal is or comprises the temperature signal or a signal indicative of the temperature signal, wherein the temperature control signal is generated by the control module after a predetermined delay time. Alternatively, the temperature control signal may be indicative of a terminal temperature being determined by the control module. Alternatively, the temperature control signal, when supplied to a food preparation apparatus, may be indicative that the temperature signal also being supplied to the food preparation apparatus in parallel is a setpoint temperature for further preparing the food, wherein preferably the setpoint temperature is indicating to a food preparation apparatus the setpoint temperature for further preparing (processing) the food.

Temperature sensors are usually made from metals like stainless steel, which may conduct heat slowly compared to the food itself. When the temperature sensor is inserted into food, it may initially experience the temperature of the surface of the food, but it may take a few moments for the internal components of the temperature sensor to catch up and reach the same temperature as the food. Furthermore, if the temperature sensor is large or thick, it may take longer for it to equilibrate with the temperature of the food, because there is more material inside the temperature sensor that needs to adjust to the temperature of the food. Additionally, the heat may move from the food to the temperature sensor via conduction. In some cases, the food may not be uniform in temperature (e.g., a large roast or thick piece of meat). Thus, it may take a little time for the temperature sensor to "feel" the true internal temperature of the food. By generating the control signal by the control module after a predetermined delay time, it may be ensured that a delay of the temperature signal of the temperature sensor of the temperature probe may be compensated. Alternatively, it may be also possible that the control module determines a terminal temperature that may compensate the temperature delay of the temperature sensor. Thus, the temperature probe arrangement may actively compensate the delay of the temperature sensor when the temperature of the food rises. This may in turn lead to more consistent and reliable cooking results.

By indicating to a food preparation apparatus that the temperature signal is a setpoint temperature for further preparing the food, the food preparation apparatus may e.g. use this setpoint temperature for the heating process of the food. In particular, the temperature set by the food preparation apparatus according to the temperature control signal may remain stable at the setpoint temperature. This may be beneficial for consistency of the heat-up process. This may be especially beneficial for delicate foods, where careful temperature control may be crucial.

Preferably, and when the temperature control signal is only generated by the control module after a predetermined delay time, or when the temperature control signal is indicative of a terminal temperature being determined by the control module, the temperature signal may be the setpoint temperature to be entered into the food preparation apparatus as a setpoint temperature.

Preferably, and when the temperature control signal supplied to a food preparation apparatus is indicating that the temperature signal also being supplied to the food preparation apparatus is a setpoint temperature for further preparing the food, the food preparation apparatus may be informed that the temperature signal from the temperature probe being (in this moment) supplied in parallel to the temperature control signal to the food preparation apparatus, may be from then on to be taken as the setpoint temperature.

Preferably, the control module is configured to receive the trigger signal and, after a predetermined delay time after the receipt of the trigger signal, to generate the temperature control signal.

As the control module may be configured to generate the temperature control signal after a predetermined delay time, a temperature delay time of the temperature signal of the temperature sensor may be compensated. This may allow to safely determine the real temperature of the food that is in thermal contact with the temperature sensor and set a corresponding temperature control signal. Thus, the food thermometer arrangement may actively compensate the delay of the temperature sensor when the temperature of the food rises, which may lead to more consistent and reliable cooking results.

In case of generating the temperature control signal after a predetermined delay time, the temperature control signal may be the currently detected temperature signal or a signal indicative of the temperature signal (e.g. the currently detected) or a signal indicating that the current temperature signal transmitted by the transmitting module may be the valid setpoint temperature.

Preferably, the predetermined delay time may be device dependent. For example, it may depend on the geometry and/or mass and/or the area size of the heat transfer surface of the temperature sensor and/or the material of the physical temperature sensor of the temperature probe and/or the material and thickness of the material enclosing the physical temperature sensor which may all influence the speed until acquiring the temperature of the surroundings.

Preferably, the control module is configured to receive the trigger signal and, when having received the trigger signal, to determine a terminal temperature by analyzing the temporal behavior of the temperature signal and then to generate the temperature control signal. The terminal temperature may be an estimate for the true temperature of the food which the temperature sensor would have acquired/attained after an equilibration time. Determining the terminal temperature as estimation for the true food temperature may be faster for determining the setpoint temperature as compared to detect the temperature as setpoint temperature after the predetermined delay time.

Consequently, upon receiving the trigger signal, the control module may analyze the temporal behavior of the temperature signal. Upon this analysis, the control module may determine a temperature signal that may correspond to a temperature signal the temperature sensor may reach, if it is in thermal equilibrium with the food. As a result, the terminal temperature is determined more quickly compared to waiting for the temperature sensor to reach thermal equilibrium with the food. Thus, by determining a terminal temperature by analyzing the temporal behavior of the temperature signal may allow to actively compensate the delay of the temperature signal of the temperature probe compared to the real temperature of the food. This may avoid overcooking or undercooking of the food and may lead to more consistent and reliable cooking results.

Preferably, the control module is adapted to determine the terminal temperature based on at least two temperature values retrieved at different time points after having received the trigger signal, or based on a gradient of the temperature rise after having received the trigger signal.

By determining the terminal temperature based on at least two temperature values retrieved at different time points may allow to obtain a better resolution of the temporal behavior of the temperature measured by the temperature sensor. Thus, the temporal behavior in approaching towards the actual food temperature is determined more accurately. Determining the terminal temperature based on a gradient of the temperature rise may help to smooth out high-frequency noise. While the raw values may jump due to noise or outliers, the gradient typically emphasizes larger, meaningful changes. Using discrete values may make it harder to distinguish between actual trends and random fluctuations. Thus, by using the gradient of the temperature rise relevant trends are more reliably recognized over random noise, improving the reliability of the signal analysis. In general, the temporal behavior of the temperature of the food is determined in a more reliable manner. Consequently, the food is cooked at a precise temperature, which may avoid overcooking or undercooking of the food.

Preferably, the trigger element comprises a detector element adapted to detect that or being indicative that the temperature probe has been positioned in thermal contact with the food. As a result, it may be ensured that the temperature probe has been positioned correctly. Thus, measurement errors of the temperature of the food due to misplacement of the temperature probe may be avoided.

Preferably, the trigger element comprises a movement sensor adapted to detect a movement of the temperature probe. The trigger element may for example be adapted to detect an acceleration of the temperature probe.

Preferably, the trigger element is adapted to generate the trigger signal, if a signal indicating the movement of the temperature probe is below a predetermined movement threshold; or wherein the trigger element is adapted to generate the trigger signal, if a signal indicating the movement of the temperature probe is above a predetermined movement threshold; or wherein the trigger element is adapted to generate the trigger signal, if a signal indicating the movement of the temperature probe is indicative for a predetermined movement pattern or a sequence of predetermined movement patterns; or wherein the trigger element is adapted to transmit a time-dependent trigger signal indicating the movement of the temperature probe to the control module and the control module is adapted to generate a start signal, if the time-dependent trigger signal is below a predetermined movement threshold, or is above a predetermined movement threshold, or is indicative for a predetermined movement pattern or a sequence of predetermined movement patterns.

The movement signal being below the predetermined movement threshold may indicate that the user has stopped moving the temperature probe (e.g., after placing it on or in the food's surface). This suggests that the temperature sensor is likely positioned at the target location and is in thermal contact with the portion of food whose temperature is to be detected. Due to an ongoing movement of the temperature probe by the user, unintentionally different parts of the food having different temperatures may be sampled. In particular, in larger or thicker pieces of food, there may be temperature variations, and moving the temperature probe may lead to temperature signals corresponding to a blend of hot and cold spots, which may not represent the actual temperature throughout the entire food. This may lead to inaccurate temperature signals. Furthermore, by a constant movement of the temperature probe, the temperature sensor may not get into a thermal equilibrium with the food.

Thus, the temperature signal provided by the temperature sensor may underly a high measurement error. As a result, by a movement signal of the temperature probe below the predetermined threshold, measurement errors of the temperature of the food are avoided. Consequently, by generating a trigger signal, if the signal indicating movement is below the predetermined threshold, it may be ensured that the temperature probe has been positioned correctly.

The movement signal being above the predetermined threshold may indicate that the user is in the act of removing or has been removing the temperature probe. Thus, the trigger signal may be indicative that the temperature provided with the temperature control signal should be maintained or that the temperature provided with the temperature control signal should be decreased such that the food may be kept warm but is not overcooked.

A 'predetermined movement' pattern may for example be indicative for the user tipping the temperature probe. For example, the 'sequence of predetermined movement patterns' may be a predetermined tipping pattern where for example the user tips the temperature probe twice or three times to trigger the trigger signal. Thus, by using a predetermined movement pattern, it may be required that the user performs an additional movement to indicate that the temperature sensor is positioned appropriately. Thus, it may be safely ensured that the temperature sensor is positioned at the appropriate position. Consequently, this may allow reliable temperature measurement of the temperature sensor.

The 'processing' of the movement signal may be provided in the trigger element itself or may be provided by the control module which then receives a time-dependent trigger signal from which the state where to start the time delay is determined.

Preferably, the trigger element comprises a touch button, a piezo sensor adapted to detect a pressure force exerted onto the temperature probe, or a capacitive sensor adapted to detect a user finger by a change of the capacitance, for generating the trigger signal.

By a trigger element that comprises a touch button, a simple and intuitive way for the user to interact with the device may be provided, as a touch button is commonly used in many modern devices. Furthermore, a touch button may allow to quickly initiate the trigger function and may provide immediate feedback and control. A piezo sensor may detect a pressure force exerted on the temperature probe, which may be particularly useful if the system is designed to start measuring once the probe is properly inserted into the food, which may prevent accidental triggering of the trigger signal. In addition, piezo sensors are solid-state devices, meaning they do not comprise mechanical components that may wear out. Capacitive sensors may detect the presence of a user's finger through changes in capacitance. Consequently, physical contact is not required, and a more hygienic process may be obtained. Furthermore, capacitive sensors may be sensitive to very small changes in the electric field, which may allow a more precise detection of touch or proximity. Capacitive sensors also may allow for smooth, touch-sensitive surfaces without physical buttons, which may lead to a modern and aesthetically appealing of the temperature probe.

The aforementioned elements of the trigger element may be provided alternatively or in addition to the movement sensor.

According to an aspect of the invention, a food preparation arrangement is provided. The food preparation arrangement comprises the food thermometer arrangement as described above or below, and a food preparation apparatus adapted to receive a temperature signal and/or a control signal transmitted by the food thermometer arrangement.

The food preparation apparatus may for example comprise a cooking hob, an oven, a microwave heater, an induction heater or the like and by providing the temperature control signal the control of temperature of the food preparation arrangement is improved.

Preferably, the food preparation apparatus comprises a heater controller, one or more heating devices adapted to heat food and/or a container holding the food under the control of the heater controller, and a receiving module configured to receive the temperature control signal from the control module and/or the temperature signal from the temperature sensor and/or the temperature control signal from a or the mobile device and/or a digital representative of the temperature signal from the mobile device.

Providing a heater controller may allow to maintain a specific temperature within a narrow range, which may be crucial for obtaining the desired cooking point of the food. In addition, it may prevent the temperature from fluctuating too much, ensuring that the heat stays within the desired parameters. The heater controller may optimize energy usage by only heating, when necessary. The heater controller may also prevent an unnecessary heating process when the desired temperature is already reached, which may further save electrical power.

By using one or more heating devices more than one food item can be prepared. Thus, usage of the food preparation apparatus in connection with commercial kitchens, e.g. restaurants or canteens, may be facilitated.

The receiving module may allow to use an additional module that is configured to receive signal inputs from various sources. Thus, the inputs from the various sources may be put together at one module and therefore usage of the various signals may be facilitated. Furthermore, by using a remote control signal from a mobile device may allow a user to set the temperature control signal from a location that is not nearby the food preparation arrangement. Thus, the user friendliness may be enhanced.

A heating device may for example comprise a resistance heater (e.g. of an oven or a hop), an induction coil, a microwave radiator (e.g. of a microwave oven), a steam generator (e.g. of a steamer).

Preferably, the food preparation apparatus further comprises the trigger element and/or the control module.

According to an aspect of the invention, a food preparation control arrangement is provided. The food preparation control arrangement comprises the food thermometer as described above or below, and a mobile device adapted to communicate with the food thermometer arrangement and the food preparation arrangement.

Preferably, the mobile device comprises a receiving module configured to receive the temperature control signal from the control module and/or the temperature signal from the temperature sensor and/or control signals from a or the food preparation apparatus, a transmission module configured to transmit control signals to a or the food preparation apparatus, and the trigger element and/or the control module. The mobile device may be a mobile phone, a tablet computer, a computer and the like.

Preferably the trigger element and/or the control module may be implemented as software applications on the mobile device.

By providing a food control arrangement that comprises a mobile device, allows a user for example to set the temperature control signal from the mobile device. The user may control the operation of the food preparation apparatus from any location, in particular a location that is not nearby the food preparation arrangement. Thus, the user friendliness may be enhanced.

According to an aspect of the invention a method for operating a food thermometer arrangement is provided, wherein the food thermometer arrangement comprises a temperature probe. The method comprises the steps of providing a temperature signal by a temperature sensor adapted to be positioned in thermal contact with a food and transmitting a temperature signal and/or control signals to a food preparation apparatus by a transmission element. The method further comprises generating a trigger signal by a trigger element, receiving the temperature signal from the temperature sensor and the trigger signal from the trigger element by a control module, wherein the control module is configured to generate a temperature control signal in dependency of the temperature signal and the trigger signal.

It is to be understood that the features mentioned above and those yet to be explained below can be used not only in the respective combinations indicated, but also in other combinations or in isolation. In particular, the features of the different aspects, embodiments and examples can be combined with each other unless noted to the contrary.

Any feature disclosed herein (for the above embodiments and/or configurations and from the below described detailed embodiments and modifications) can be combined with the claimed subject individually or in any sub-combination. If herein the conjunction "and/or" is used all logical elements and combinations are individually disclosed. E.g. a, b and/or c discloses the elements/combinations a, b, c, ab, ac, bc as well as abc.

### BRIEF DESCRIPTION OF THE DRAWINGS

Reference is made in detail to preferred embodiments of the invention, examples of which are illustrated in the accompanying figures.
- Fig. 1: is a schematic drawing showing a first food preparation arrangement.
- Fig. 2: is a schematic drawing showing a second food preparation arrangement.
- Fig. 3: is a schematic drawing showing a third food preparation arrangement.
- Fig. 4: is a schematic drawing showing exemplary input and output of a control module.
- Fig. 5: is a schematic drawing showing a fourth food preparation arrangement.
- Fig. 6: is a schematic drawing showing a fifth food preparation arrangement.
- Fig. 7: is a graph drawing showing a first example of a temperature signal.
- Fig. 8: is a graph drawing showing a second example of a temperature signal.
- Fig. 9: is a graph showing a third example of a temperature signal.

### DETAILED DESCRIPTION OF THE DRAWINGS

In the following figures examples for food thermometer arrangements, food preparation arrangements, food preparation control arrangements and methods of operation thereof are shown and described in further detail. In the drawings, like reference numerals refer to like elements.

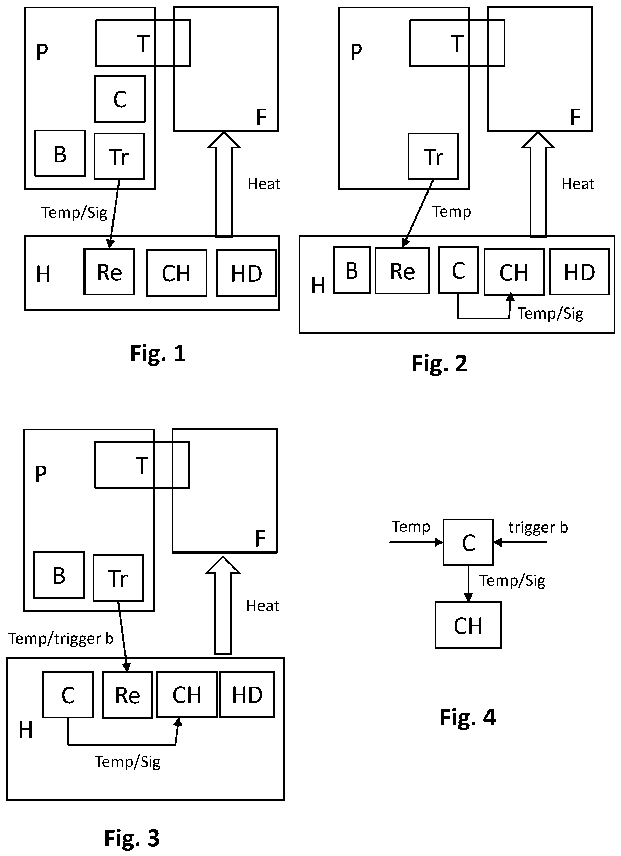

Fig. 1 shows a schematic drawing of a first food preparation arrangement comprising a food thermometer arrangement. The food thermometer arrangement comprises a temperature probe P having a probe body. The temperature probe P comprises a control module C, a transmitting module Tr and a trigger element B. The temperature probe P further comprises a temperature sensor T, which can be positioned to be in thermal contact with a food F, where "in thermal contact with a Food F" means in thermal contact with a medium in which the food F is prepared (e.g. cooked or baked), or in physical contact with the surface of the food F, or in physical contact with the inside of the food F, i.e. at least partially inserted into the food.

The trigger element B is adapted to generate a trigger signal b. The trigger element B may comprise a button positioned on the temperature probe P, i.e. it may be a trigger button (herein also assigned with reference numeral "B") on such temperature probe. Generally the trigger element B may be implemented as a button (e.g. a push button) or as a touch button on a touch sensitive element (e.g. a screen of a user interface) or as a touch sensitive capacitive sensor or as a movement and/or vibration sensor or the like.

A user may be able to interact with the trigger element B by pressing or activating it. The control module C is configured to receive the temperature signal Temp from the temperature sensor T and the trigger signal b from the trigger element B. The control module C may further be configured to generate a temperature control signal Sig after a predetermined delay time t_{d} from the receipt of the trigger signal b.

Preferably the temperature control signal Sig is a digital signal which for example may be a dual-state signal with the states ON/OFF. The signal Sig is transferred directly or via forwarding over e.g. a mobile device M to the food preparation apparatus H and indicates to the food preparation apparatus H that the temperature signal received in parallel at the food preparation apparatus H is the setpoint temperature for further heating the food to be prepared. Alternatively the digital temperature control signal Sig includes a digital representative of the setpoint temperature at which the food preparation apparatus H should further process the food.

Upon having positioned the temperature sensor T in thermal contact with the food, the user may trigger the trigger signal b by interacting with the trigger element B. Thereby the user indicates that the temperature sensor T is in thermal contact with the food or fluid such that a terminal temperature can be detected which in the following heat processing should be held. However, the temperature measured by the temperature sensor T at the time tᵢ of triggering the signal button B may not be the true temperature (i.e. the 'terminal' temperature) of the food since the initially cold (or even hot) temperature sensor needs a while before it reaches thermal equilibrium with the food F or fluid. Thus, the temperature sensor may have a delay time period in acquiring the true terminal temperature. This delay time period may correspond to the predetermined delay time t_{d}. Alternatively, it may be also possible that the control module determines a terminal temperature that may correspond to the 'true' food temperature 20 being a temperature the temperature sensor T may reach, when it is in thermal equilibrium with the food F.

The transmitting module Tr may be configured to transmit the temperature signal and/or a digital signal Temp/Sig to a food preparation apparatus H. The temperature signal and/or digital signal Temp/Sig may be transmitted by a wire or wireless. The food preparation apparatus H may comprise a receiving module Re, which may be configured to receive the temperature signal and/or digital signal Temp/Sig transmitted by the transmitting module Tr. The food preparation apparatus H may further comprise a heater controller CH and one or more heating devices HD adapted to heat the food and/or a container holding the food F under the control of the heater controller CH.

Fig. 2 shows a second example of a food preparation arrangement where the temperature probe P comprises the temperature sensor T and transmission module Tr, while the trigger element B may be provided as part of the food preparation apparatus H instead of being provided as part of the food thermometer arrangement (as in Fig. 1). In this embodiment the probe may be implemented by temperature insensitive elements for the transmission module Tr, for example by passive electronic elements or mainly passive electronic components. For example the transmission module T may transform the temperature signal Temp into an impedance converted analog signal and/or may be a connector element for wired connection or a RFID transceiver for wireless connection with the receiving module Re in the apparatus H. The transmission module T sends the (possibly impedance-matched) analog signal corresponding to temperature signal Temp or a digitized counterpart thereof (e.g. in case of wireless transmission) to the receiver module Re.

The food preparation apparatus may for example be a cooking hob, an oven, a microwave heater, an induction heater or the like. Thus, the user may trigger the trigger signal b from the food preparation apparatus H. This may be more convenient for the user compared to the case in which the trigger element B is arranged on the temperature probe P (see example of Fig. 1). By providing the trigger element B at the food preparation apparatus H the temperature sensor T is not moved or repositioned during the triggering activity thus avoiding unintentional movement of the temperature sensor T and possibly sensing different temperatures. As a result, a more accurate temperature detection is provided.

In addition to the trigger element B the food preparation apparatus H may comprise the control module C which receives (from the receiving module Re) the temperature signal Temp (or its digitized equivalent) and from the trigger element B the trigger signal b. The control module C then outputs the temperature control signal Sig (and in an alternative additionally the temperature Temp) to hand over the setpoint temperature to the heater controller CH.

The solution of the Fig. 2 allows to provide a more compact temperature probe P, as it requires less components. This may lead to a more cost-effective solution of the temperature probe. Furthermore, as the temperature probe P may be exposed to a hot environment, the heat transfer of these components may be designed to be controlled more effectively and the heat load may be kept within the probe's rated tolerance, which may result in a longer lifetime of the temperature probe P.

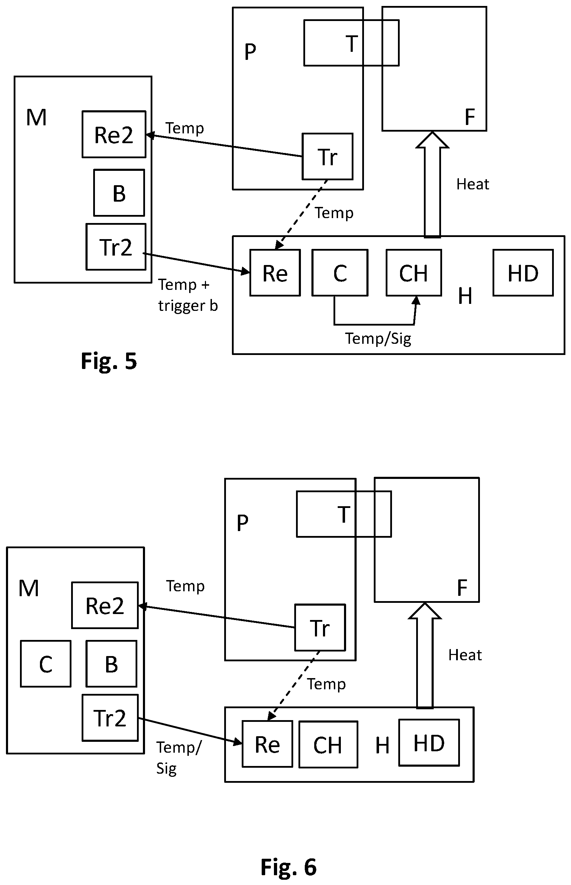

Further, when the trigger element B is implemented in the food preparation apparatus (e.g. Fig. 2) or in the mobile device M (e.g. Figs. 5, 6) it may be provided as a trigger module comprising the combination of a software application configured to receive an input signal (being the trigger signal) from a user interface which in turn may be implemented as an individual touch sensitive individual element (e.g. a button, vibration/acceleration sensor or the like as mentioned above) or being part of a touch sensitive screen.

Alternatively, in a third food preparation arrangement shown Fig. 3 the control module C may be provided as part of the food preparation apparatus H while the trigger element B is provided in the probe B. In this alternative the transmitting module Tr transmits the temperature signal Temp or its equivalent and the trigger signal b from the temperature probe P to the food preparation apparatus H. In apparatus H the control module receives the temperature signal Temp (or its equivalent) and the trigger signal b and provides the temperature control signal Sig (and in an alternative additionally the temperature Temp) to hand over the setpoint temperature to the heater controller CH.

The control module C may be implemented in hardware and/or in software in - or as - a controller, for example in the heater controller CH. Thus, by integrating the control module C as part of the food preparation apparatus H, the hardware and/or software demands of the temperature probe are minimal and a cost-effective design of the temperature probe P is achieved. Furthermore, as most of the modern-day food preparation apparatuses H, e.g. an oven or a microwave, already comprise hardware and/or software, the control module C can be integrated into already existing setups. As a result, this may result in a more cost-effective setup.

Fig. 4 exemplifies signal processing in the control module C which receives the temperature signal Temp from the temperature sensor T and the trigger signal b from the trigger element B. Control module C outputs the temperature control signal Sig which is a digital signal that indicates to the heater controller CH the setpoint temperature at which the food preparation apparatus H should hold the food in the further food preparation process. Alternatively the control module C outputs the temperature control signal Sig and the temperature signal Temp wherein the control signal Sig then indicates when the presently transmitted temperature signal Temp corresponds to the temperature which should be the setpoint temperature. In the latter case for example the control signal Sig is a 'Hold' signal indicating to the heater controller CH that the currently applied temperature signal Temp should be stored as the setpoint temperature (setpoint temperature value).

Fig. 5 shows a fourth food preparation control arrangement. This food preparation control arrangement comprises a mobile device M, a temperature probe P and a food preparation apparatus H. The mobile device M comprises a second receiving module Re2, which may be configured to receive a digital counterpart of the temperature signal Temp transmitted by the transmitting module Tr of the temperature probe P.

The mobile device M further comprises the trigger element B. In this case, the trigger element B may be implemented as part of a software that is installed on the mobile device M. The user may be able to trigger a trigger signal b by interacting with the trigger element B on the display or user interface of the mobile device M. The trigger element B may be a touch button displayed on the display of the mobile device. The trigger signal b together with the temperature signal Temp received from the temperature probe P via the second receiving module Re2 may be transmitted to the food preparation apparatus H by a second transmitting module Tr2. Alternatively or additionally the temperature signal Temp is wired or wireless transmitted from the probe directly to the food preparation apparatus H.

In this arrangement the control module C is arranged in the food preparation apparatus H and receives via the receiving module Re in the apparatus H the (digital (from M or P) or analog (wired from P)) temperature signal Temp and the trigger signal b. The control module C generates signal Sig/Temp as described before and applies it to the heater controller CH. As mentioned before the control module C may be an application program module of the heater controller CH.

Thus, the user may trigger a trigger signal that is provided to the food preparation apparatus H from any location, in particular a location that is not nearby the food preparation apparatus H. Thus, the user friendliness is enhanced.

In the fifth food preparation arrangement shown in Fig. 6, the control module C may be integrated into the mobile device M. Since the control module C requires computational capacity to perform control operations, the mobile device's existing processing power may be utilized, which may minimize the need for additional hardware. By leveraging the mobile device's resources, the system requirements for the remaining components like the temperature probe P and the heater controller CH may be kept as minimal as possible. Ideally, the trigger element B and/or control module C could be implemented as software applications on the mobile device. Given that the mobile device M is typically already provided by the user, this approach enables a more cost-effective implementation by reducing the need for extra components.

When providing the control module C and the trigger element B on the mobile device M, the digital signal Temp/Sig may be generated on the mobile device M. This may subsequently be transmitted to the food preparation apparatus H, which may adapt its operation depending on the received temperature signal and/or digital signal Temp/Sig.

As compared to the arrangement of Fig. 6, in the arrangement of Fig. 5 the control module C may be integrated into the food preparation apparatus H. Most of the modern-day food preparation apparatuses H, e.g. an oven or a microwave, already comprise hardware and/or software. By integrating the control module C into the food preparation apparatus H, the control module C is integrated into this existing setup and an additional software module on the mobile device H may be avoided. Consequently, compared to the setup of Fig. 6, the computational burden on the mobile device M is minimized.

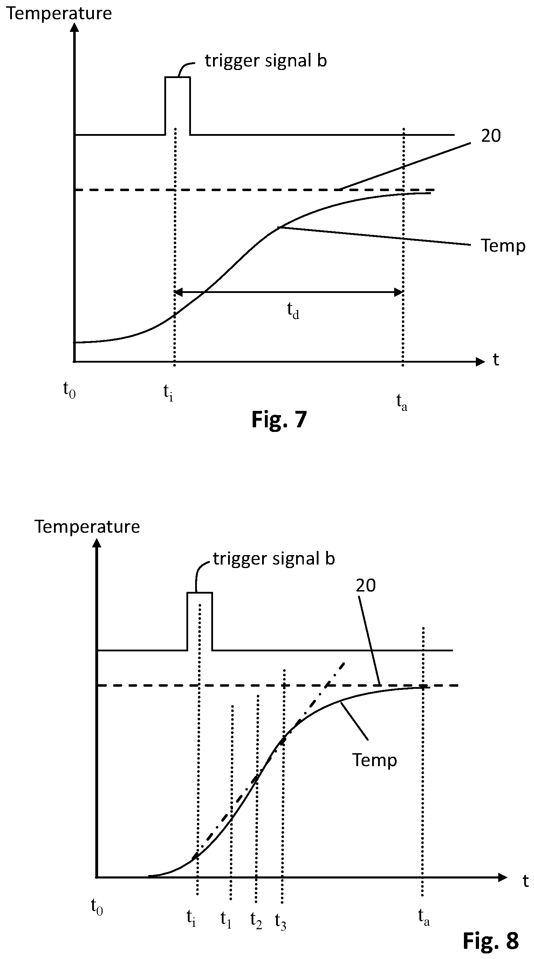

In the graphic of Fig. 7, the x-axis corresponds to the time t passed after positioning the temperature sensor T in thermal contact with the food F. The y-axis corresponds to the temperature Temp (or trigger signal voltage in case of the trigger signal b). The line "Temp" corresponds to the temperature signal provided by the temperature sensor T. Line 20 corresponds to the actual temperature of the food F. The pulse raising from and descending to the zero line is the trigger signal b generated by a user when activating the trigger element B.

At the initial time t₀, the user is positioning the temperature sensor T in thermal contact with the food F and the temperature signal Temp of the temperature sensor T starts at an initial temperature signal (e.g. room temperature). When having positioned the temperature sensor T in thermal contact with the food F at trigger time tᵢ, the user triggers a trigger signal b by interacting with the trigger element B. This is indicated by the pulse signal of curve 22. The trigger signal b indicates that the temperature sensor T is in thermal contact with the food at the time tᵢ of triggering and signal b is received by the control module C at trigger time tᵢ.

Upon positioning the temperature sensor T in thermal contact with the food F, the temperature signal Temp of the temperature sensor T increases. After a rapid increase, the temperature signal Temp may have an asymptotic approach to the actual temperature 20 of the food. After a certain time, the temperature sensor T may reach thermal equilibrium with the food F. In the present example, the temperature sensor T is initially colder than the food F and absorbs heat from the food F as soon as it is in thermal contact with the food F and the temperature of the temperature sensor T ascends. As the heat spreads from the food F into the temperature sensor T, the temperature difference between the two diminishes, and the temperature signal Temp of the temperature sensor T begins to approach that of the food F. Eventually, when the heat transfer is complete, both the food and the sensor reach uniform temperatures, entering thermal equilibrium.

When the user activates the trigger element B at time tᵢ, the temperature signal Temp is transmitted to the control module C. In the example of Fig. 7, the control module C starts a delay time t_{d} from the triggering time tᵢ and which ends at time point tₐ, wherein the delay time t_{d} is a predetermined period of delay which preferably depends on constructional and heat capacity/conductivity parameters of the temperature sensor T and/or the temperature probe P. The length of the delay time (period) t_{d} is such that the temperature measured with the temperature sensor after t_{d} has nearly settled with the ambient (i.e. food) temperature. Therefore this temperature value is a good approximation to the real temperature of the food which is for example to be used by the food preparation apparatus H as a setpoint temperature to which the further temperature measured by the temperature probe P is to be adjusted.

The food thermometer arrangement may comprise a feedback control loop. As an example, in the following the feedback control loop is explained in connection with Fig. 5. In Fig. 5 the temperature Temp measured by the temperature sensor T of the temperature probe P is transmitted by the transmitting module Tr to the second receiving module Re2 of the mobile device M. It may then be transmitted by the second transmission module Tr2 of the mobile device M to the receiving module Re of the food preparation apparatus H, which e.g. comprises an induction hob. At the control module C of the food preparation apparatus H the temperature Temp measured by the temperature sensor T may be compared with the setpoint temperature. Upon this comparison, the control module C may generate a temperature control signal Temp/Sig that is transmitted to the heater controller CH. The heater controller CH may then transmit a heating power control signal to the heating device HD, which may comprise an induction circuit. The heating power from heating device HD is then transmitted to the food F, which may be for example contained in a pot. Upon controlled change of the heating power the actual temperature of the food F may change. This change may be measured by the temperature sensor T of the temperature probe P, which generates the temperature signal Temp. As digitized signal the temperature signal Temp is then transmitted as actual value of the food temperature to the mobile device M such that the feedback loop is closed and the food temperature T is controlled to maintain the setpoint temperature.

As shown in the alternative embodiment of Fig. 8, instead of using a predetermined delay time (period) t_{d} as shown in Fig. 7, the control module C may determine a terminal temperature by analyzing the temporal behavior of the temperature signal Temp detected in a transition period after initialization by the trigger signal b at trigger time tᵢ. The control module C may then be configured to generate the temperature control signal Temp/Sig based on this calculated or estimated terminal temperature. In the present example, the analysis is based on three values of the temperature signal Temp retrieved at different points in time (time periods) t₁, t₂ and t₃ after receiving the trigger signal b at the trigger time tᵢ (in this example when reaching three consecutive time periods after tᵢ). The control module C may interpolate these retrieved temperature values to estimate the terminal temperature which the temperature sensor will reach as an approximation to the actual food temperature 20.

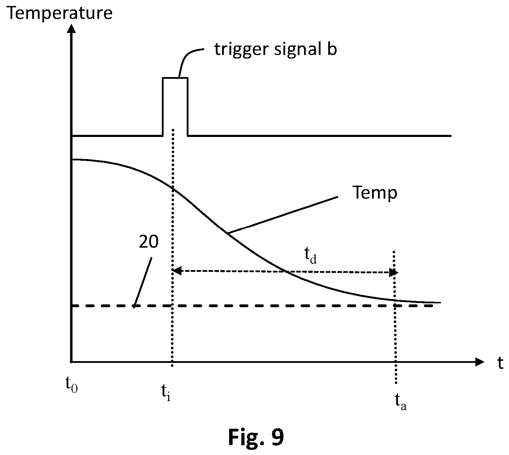

As shown in Fig. 8, this approach allows the control module C to generate the temperature control signal Temp/Sig faster as compared with the case depicted in Figs. 7 and 9 where the setpoint temperature can be approximated only after the delay time t_{d}.

Alternatively, the control module C may use other numeric methods in order to interpolate the retrieved temperature signal Temp. In particular, the control module C may use spline interpolation, linear interpolation, polynomial interpolation or exponential interpolation.

Fig. 9 shows a case where the temperature Temp of the temperature sensor T is initially higher than the food temperature 20 at the initial time t₀ and when having completed the insertion of the sensor T at tᵢ. In this case, the temperature curve mirrors the progression seen in Figs. 7 and 8, but in reverse - i.e. as a declining curve. The temperature signal Temp of the temperature sensor T decreases and eventually reaches thermal equilibrium with the food temperature 20. As with the cases in Figs. 7 and 8, thermal equilibrium is nearly reached after a predetermined delay time t_{d}. As in the case of Fig. 7 the control module may then be configured to generate the temperature control signal Temp/Sig by measuring the sensor temperature at tₐ, which is the period t_{d} after activating the trigger signal b which is shown as a pulse raising from and descending to the zero line. Alternatively, the control module C may also generate a temperature control signal Temp/Sig by determining a terminal temperature, as explained in connection with Fig. 8.

### Reference Numeral List

- 20: actual temperature of food
- 23: temperature setpoint
- T: temperature sensor
- P: temperature probe (probe body)
- C: control module
- CH: heater controller
- HD: heating device
- H: food preparation apparatus
- M: mobile device
- Re: receiving module
- Re2: second receiving module
- Tr: transmitting module
- Tr2: second transmitting module
- F: food
- B: trigger element (e.g. trigger button / trigger module)
- b: trigger signal(generated by user interaction at trigger element)
- Temp: temperature signal of temperature sensor (or analog equivalent) (wired or wireless transmission)
- Sig: temperature control signal being a digital signal (wired or wireless)
- t: time
- t_{d}: delay time
- tₐ: approximation time
- t₀: initial time (sensor in thermal contact with food/fluid)
- tᵢ: time of triggering (upon trigger signal b)
- t₁, t₂, t₃: different points in time

## Claims

1. Food thermometer arrangement comprising:
a temperature probe (P) having:
a temperature sensor (T) adapted to provide a temperature signal (Temp) and adapted to be positioned in thermal contact with a food (F), and
a transmission element (Tr) configured to transmit the temperature signal (Temp) and/or control signals to a food preparation apparatus (H);
a trigger element (B) adapted to generate a trigger signal (b); and
a control module (C) configured to receive the temperature signal (Temp) from the temperature sensor (T) and the trigger signal (b) from the trigger element;
wherein the control module (C) is configured to generate a temperature control signal (Temp/Sig) in dependency of the temperature signal (Temp) and the trigger signal (b).

2. The food thermometer arrangement according to claim 1, wherein
a) the temperature control signal is the temperature signal (Temp) or a signal indicative of the temperature signal, wherein the control module (C) is configured to generate the temperature control signal (Temp/Sig) only after a predetermined delay time (t_{d}) from a time (t₀) in the trigger signal (b), or
b) the temperature control signal (Temp/Sig) is indicative of a terminal temperature of the temperature sensor being determined by the control module (C), or
c) the temperature control signal (Temp/Sig) is supplied to a food preparation apparatus and is indicating that the temperature signal (Temp) also being supplied to the food preparation apparatus is a setpoint temperature for further preparing the food, wherein the setpoint temperature is indicating to a food preparation apparatus (H) the setpoint temperature for preparing the food.

3. The food thermometer arrangement according to claim 1, wherein the control module (C) is configured to receive the trigger signal (b) and, when having received the trigger signal, to determine a terminal temperature by analyzing the temporal behavior of the temperature signal (Temp) and then to generate the temperature control signal (Temp/Sig).

4. The food thermometer arrangement according to claim 3, wherein the control module (C) is adapted to determine the terminal temperature
based on at least two temperature values retrieved at different time points (t₁, t₂, t₃) after having received the trigger signal (b), or
based on a gradient of the temperature after having received the trigger signal (b).

5. The food thermometer arrangement according to any of the preceding claims, wherein the trigger element (B) comprises a movement sensor adapted to detect a movement of the temperature probe (P).

6. The food thermometer arrangement according to claim 5,
wherein the trigger element (B) is adapted to generate the trigger signal (b) if a signal indicating the movement of the temperature probe (P) is below a predetermined movement threshold, or
wherein the trigger element (B) is adapted to generate the trigger signal (b) if a signal indicating the movement of the temperature probe (P) is above a predetermined movement threshold, or
wherein the trigger element (B) is adapted to generate the trigger signal (b) if a signal indicating the movement of the temperature probe (P) is indicative of a predetermined movement pattern or a sequence of predetermined movement patterns, or
wherein the trigger element (B) is adapted to transmit a time-dependent trigger signal indicating the movement of the temperature probe to the control module (C) and the control module (C) is adapted to generate the trigger signal (b), if the time-dependent trigger signal is
below a predetermined movement threshold, or
is above a predetermined movement threshold, or
is indicative for a predetermined movement pattern or a sequence of predetermined movement patterns.

7. The food thermometer arrangement according to any of the preceding claims, wherein the trigger element (B) comprises a touch button, a piezo sensor adapted to detect a pressure force exerted onto the temperature probe (P), or a capacitive sensor adapted to detect a user finger by a change of the capacitance.

8. A food preparation arrangement comprising:
the food thermometer arrangement of any of the preceding claims, and
a food preparation apparatus (H) adapted to receive a temperature signal (Temp) and/or the temperature control signal (Temp/Sig) transmitted by the food thermometer arrangement.

9. The food preparation arrangement according to claim 8, wherein the food preparation apparatus (H) comprises
a heater controller (CH),
one or more heating devices (HD) adapted to heat food and/or a container holding the food under the control of the heater controller (CH), and
a receiving module (Re) configured to receive the temperature control signal (Temp/Sig) from the food thermometer arrangement and/or the temperature signal (Temp) from the temperature probe (P) and/or the temperature control signal (Temp/Sig) from a mobile device (M) and/or the trigger signal (b) from a mobile device.

10. The food preparation arrangement according to claims 8 or 9, wherein the food preparation apparatus (H) further comprises the trigger element (B) and/or the control module (C).

11. A food preparation control arrangement comprising:
the food thermometer arrangement according to any of the claims 1 to 7 or the food preparation arrangement according to any of the claims 8 to 10, and
a mobile device (M) adapted to communicate with the food thermometer arrangement and a or the food preparation apparatus (H) .

12. The food preparation control arrangement of claim 11, wherein the mobile device (M) comprises
a receiving module (Re2) configured to receive the temperature control signal (Temp/Sig) from the control module (C) and/or the temperature signal (Temp) from the temperature sensor (T) and/or control signals from a or the food preparation apparatus (H),
a transmission module (Tr2) configured to transmit control signals to a or the food preparation apparatus (H), and
the trigger element (B) and/or the control module (C).

13. Method for operating a food thermometer arrangement, wherein the food thermometer arrangement comprises a temperature probe (P), the method comprising:
providing a temperature signal (Temp) by a temperature sensor (T) adapted to be positioned in thermal contact with a food (F), and
transmitting the temperature signal (Temp) and/or control signals to a food preparation apparatus (H) by a transmission element (Tr);
generating a trigger signal (b) by a trigger element (B);
receiving the temperature signal (Temp) from the temperature sensor (T) and the trigger signal (b) from the trigger element by a control module (C);
wherein the control module (C) generates a temperature control signal (Temp/Sig) in dependency of the temperature signal (Temp) and the trigger signal (b).

14. Method according to claim 13, wherein
a) the temperature control signal (Temp/Sig) comprises the temperature signal (Temp) or a signal indicative of the temperature signal, wherein the temperature control signal (Temp/Sig) is only generated by the control module (C) after a predetermined delay time (t_{d}), and/or
b) the temperature control signal (Temp/Sig) is indicative of a terminal temperature being determined by the control module (C), or
c) the temperature control signal (Temp/Sig) supplied to a food preparation apparatus is indicating that the temperature signal (Temp) also being supplied to the food preparation apparatus is a setpoint temperature for further preparing the food.

15. Method according to claim 13 or 14, wherein the control module (C) is configured to determine a terminal temperature upon receiving the trigger signal (b) by analyzing the temporal behavior of the temperature signal (Temp) and then to generate the temperature control signal (Temp/Sig).
